(19) Europäisches Patentamt European Patent Office Office européen des brevets

(11) **EP 3 540 553 B1**

(12) **EUROPEAN PATENT SPECIFICATION**

(45) Date of publication and mention of the grant of the patent:
**25.08.2021 Bulletin 2021/34**

(51) Int Cl.:
***G05D 1/10*** *(2006.01)*     ***G05D 1/02*** *(2020.01)*
***G05D 1/00*** *(2006.01)*

(21) Application number: **17870087.8**

(22) Date of filing: **07.11.2017**

(86) International application number:
**PCT/CN2017/109683**

(87) International publication number:
**WO 2018/086506 (17.05.2018 Gazette 2018/20)**

(54) **OPERATING METHOD AND DEVICE OF PLANT-PROTECTION UNMANNED AERIAL VEHICLE**

BETRIEBSVERFAHREN UND -VORRICHTUNG FÜR UNBEMANNTES PFLANZENSCHUTZLUFTFAHRZEUG

PROCÉDÉ ET DISPOSITIF OPÉRATOIRES DE VÉHICULE AÉRIEN SANS PILOTE DE PROTECTION D'USINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2016 CN 201610982938**

(43) Date of publication of application:
**18.09.2019 Bulletin 2019/38**

(73) Proprietor: **Guangzhou Xaircraft Technology Co., Ltd**
**Tianhe District**
**Guangzhou,**
**Guangdong 510000 (CN)**

(72) Inventors:
• **PENG, Bin**
  **Guangzhou, Guangdong 510000 (CN)**
• **LI, Jiesun**
  **Guangzhou, Guangdong 510000 (CN)**

(74) Representative: **Verriest, Philippe et al**
**Cabinet Germain & Maureau**
**12, rue Boileau**
**BP 6153**
**69466 Lyon Cedex 06 (FR)**

(56) References cited:
| | |
|---|---|
| WO-A1-2016/027544 | CN-A- 101 979 276 |
| CN-A- 103 770 943 | CN-A- 104 365 576 |
| CN-A- 104 699 117 | CN-A- 105 045 280 |
| CN-A- 105 045 280 | CN-A- 105 955 294 |
| CN-A- 106 339 004 | US-A1- 2008 307 893 |
| US-A1- 2014 032 020 | |

# Description

## Technical Field

The present invention relates to the technical field of plant protection of unmanned aerial vehicles, and in particular to an operating method and device of a plant-protection unmanned aerial vehicle.

## Background

Generally, when a plant-protection unmanned aerial vehicle performs a plant-protection operation, due to boundary restrictions of at least one operating land, the plant-protection unmanned aerial vehicle continuously changes ridges (rows) and switch flight directions during an operation process, so as to complete operation tasks within the entire operating land. In the related art, according to different mounting manners of an operating nozzle on the plant-protection unmanned aerial vehicle, commonly used ridge changing modes include translational ridge change and drift ridge change.

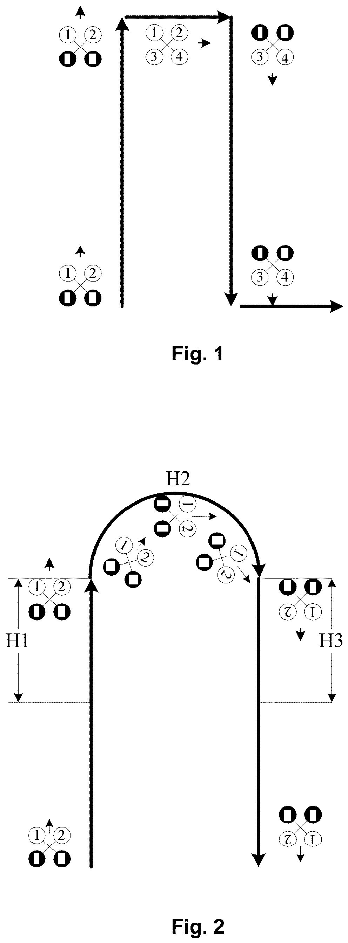

Fig. 1 is a schematic diagram of translational ridge change in the related art. The plant-protection unmanned aerial vehicle opens a rear nozzle to operate in each ridge (row) and, after reducing an operating speed at an end point of each ridge to zero by deceleration, closes the nozzle. And after automatically translating to a start point of the next ridge (row), the plant-protection unmanned aerial vehicle opens the nozzle, and then the plant-protection unmanned aerial vehicle accelerates to the operating speed, so as to complete an operation of all operating lands. As shown in Fig. 2, it is a schematic diagram of drift ridge change in the related art. When the drift ridge change is used, the plant-protection unmanned aerial vehicle starts to decelerate from the operating speed to a certain speed value at a certain distance from an end point of each ridge (e.g., H1 in Fig. 2), then changes ridges at a constant speed of the speed value along H2, and accelerates to the operating speed within a distance of H3 after the ridge change is completed.

However, both of the above two ridge changing modes have defects. For example, when the translational ridge change is used, since a operating nozzle of the unmanned aerial vehicle is in a closed state during a translation process, so that an edge of each operating land cannot be covered, but pests are mostly hidden at the edge of each operating land, so that an edge sweeping operation of each operating land is to be increased, and an entire operating efficiency is reduced. Compared to the translational ridge change, the drift ridge change does not increase the edge sweeping operation, but when drifting, the boundary between the plant-protection unmanned aerial vehicle and each operating land is likely to interfere (for example, there is a windbreak beside each operating land or other obstacles, etc.), it is prone to collision and crashing, and safety is poor.

In view of the related art, the plant-protection unmanned aerial vehicle closes the operating nozzle when changing the ridge, so that it is necessary to increase the edge sweeping operation, or it is prone to collision and crashing in the drift ridge change mode, and no effective solution has been proposed yet. WO 2016/027544A1 provides a related technical solution; however, the above mentioned problem still remains unsolved.

## Summary

The invention is as set forth in claims 1 and 6.

Compared with the related art, the embodiments of the present invention include the following advantages.

Once reaching to the first preset position of the first operating route, the plant-protection unmanned aerial vehicle starts to decelerate, so that the flight speed of the plant-protection unmanned aerial vehicle at the operating end position of the first operating route is decelerated to be zero, the plant-protection unmanned aerial vehicle flies to the operating start position of the second operating route in the translational manner at the preset angular speed, and then the plant-protection unmanned aerial vehicle flies along the second operating route. In the present embodiment, the operating nozzle is maintained in an open state during a flight process of the plant-protection unmanned aerial vehicle. Therefore, the problem in the related art of a need for an additional edge sweeping operation due to that the operating nozzle is to be closed during ridge change of a plant-protection unmanned aerial vehicle or proneness to collision and crashing caused by drift during ridge change is solved, and an operating efficiency and safety are improved.

## Brief Description of the Drawings

The accompanying drawings described herein are used to provide a further understanding of the disclosure, and constitute a part of the present invention, and the exemplary embodiments of the disclosure and the description thereof are used to explain the disclosure, but do not constitute improper limitations to the disclosure. In the drawings:

Fig. 1 is a schematic diagram of translational ridge change in the related art.
Fig. 2 is a schematic diagram of drift ridge change in the related art.
Fig. 3 is a flowchart of an operating method of a plant-protection unmanned aerial vehicle according to an embodiment of the present invention.
Fig. 4 is a schematic diagram of a plant-protection unmanned operating process according to an exemplary embodiment of the present invention.
Fig. 5 is a flowchart of an operating method of a plant-protection unmanned aerial vehicle according to an exemplary embodiment of the present invention.

Fig. 6 is a structural block diagram of an operating device of a plant-protection unmanned aerial vehicle according to an embodiment of the present invention.

**Detailed Description**

In order to make the above objects, features and advantages of the present invention become more apparent and understood, the present invention is further described in detail below with reference to the drawings and specific implementation manners.

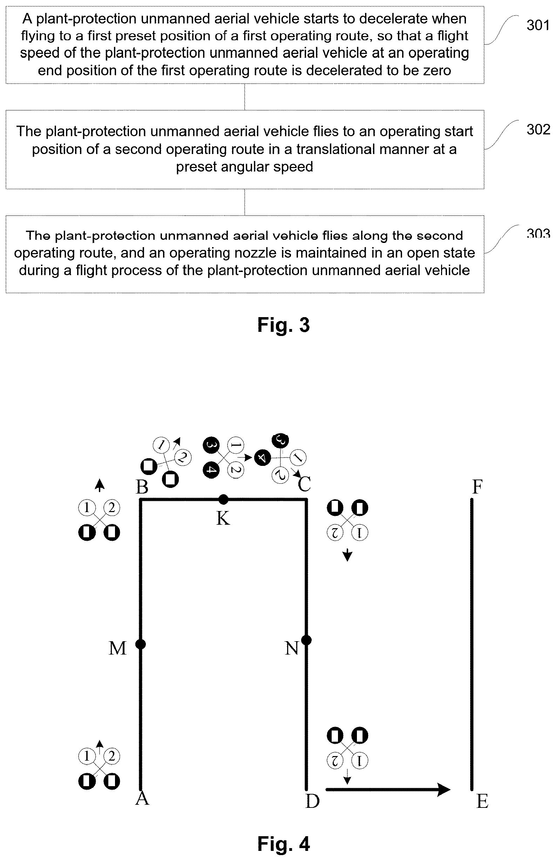

Fig. 3 is a flowchart of an operating method of a plant-protection unmanned aerial vehicle according to an embodiment of the present invention. The method may include the steps as follows.

At step 301, a plant-protection unmanned aerial vehicle starts to decelerate once reaching to a first preset position of a first operating route, so that a flight speed of the plant-protection unmanned aerial vehicle at an operating end position of the first operating route is decelerated to be zero.

Generally, before the plant-protection operation, the plant-protection unmanned aerial vehicle first maps at least one operating land to obtain boundary information of the at least one operating land, and generates at least one reference operating route according to the boundary information and a selection of a user, so that an actual flight route is generated by connecting the at least one reference operating route. The plant-protection unmanned aerial vehicle may fly according to the flight route, and carry out pesticide spraying or chemical fertilizer spraying through an operating nozzle of the plant-protection unmanned aerial vehicle during the flight, thereby completing an operation of the at least one operating land.

The at least one reference operating route generated by surveying and mapping is generally composed of multiple mutually parallel operating routes, each of which is each ridge to be flown over by the plant-protection unmanned aerial vehicle during actual operation, and may also be referred to as each row.

Fig. 4 is a schematic diagram of a plant-protection unmanned operating process according to an embodiment of the present invention. As shown in Fig. 4, there are three ridges, i.e., operating routes AB, CD, and EF. When the unmanned aerial vehicle performs a plant-protection operation, the unmanned aerial vehicle may fly from point A to point B along the operating route AB, then change the ridge to point C, and continue to change the ridge after flying to point D along the operating route CD, so as to complete operation on the operating route CD.

For example, the operating route AB as shown in Fig. 4 as the first operating route is taken as an example, when the plant-protection unmanned aerial vehicle flies along the operating route AB at a preset operating speed to reach a certain preset position, for example, the preset position may be point M in Fig. 4. Then the plant-protection unmanned aerial vehicle may start to decelerate from point M, so that the flight speed when reaching point B is decelerated to be zero. Specifically, the preset position depends on the operating speed of the plant-protection unmanned aerial vehicle and a magnitude of the accelerated speed during a decelerated flight, and those skilled in the art may set different operating speeds and accelerated speeds according to actual situations to adjust the preset position, which is not limited by the embodiment of the present invention.

At step 302, the plant-protection unmanned aerial vehicle flies to an operating start position of a second operating route in a translational manner at a preset angular speed.

Generally, when the plant-protection unmanned aerial vehicle completes the operation of the first operating route, the plant-protection unmanned aerial vehicle changes the ridge to realize the operation for the next operating route.

In an optional embodiment of the present invention, in order to ensure that the edge portion of two adjacent operating routes can be covered during the operation, the plant-protection unmanned aerial vehicle may still perform a spraying operation during a process of translation to the next operating route by controlling a lateral movement speed of the plant-protection unmanned aerial vehicle and a rotation speed of a vehicle body.

In an optional embodiment of the present invention, after reaching the operating end position of the first operating route, the plant-protection unmanned aerial vehicle may fly to the operating start position of the second operating route in the translational manner from the operating end position of the first operating route, so that the flight speed of the plant-protection unmanned aerial vehicle at the operating start position is decelerated to be zero; and the plant-protection unmanned aerial vehicle is controlled to rotationally move at the preset angular speed during the translational flight.

In a specific implementation, the plant-protection unmanned aerial vehicle may be translated from the operating end position of the first operating route to the operating start position of the second operating route by controlling a lateral movement speed of the plant-protection unmanned aerial vehicle. For example, when the ridge is changed in a edge BC in Fig. 4, the flight speed of the plant-protection unmanned aerial vehicle at the operating start position of the second operating route (point C in Fig. 4) may decelerated to be zero by successively performing a accelerated flight and then a decelerated flight. During the translational flight, the plant-protection unmanned aerial vehicle is controlled to rotate at a certain angular speed. Generally, the magnitude of the angular speed depends on a size of spacing between two operating routes and an accelerated speed of the translational flight. Therefore, in the case where the spacing of the operating routes is constant, those skilled in the art can adjust the angular speed of the body rotation by controlling the accelerated speed of the translational flight, which is not limited by the embodiment of the present invention.

It is to be noted that an operating nozzle is maintained in an open state during a ridge change process of the plant-protection unmanned aerial vehicle, so as to continue the spraying operation during the ridge change process.

At step 303, the plant-protection unmanned aerial vehicle flies along the second operating route, and an operating nozzle is maintained in an open state during a flight process of the plant-protection unmanned aerial vehicle.

In this embodiment of the present invention, when the plant-protection unmanned aerial vehicle completes the ridge change, the plant-protection unmanned aerial vehicle may fly along the second operating route to continue the subsequent operation.

Through above-mentioned embodiments of the present invention, once reaching to the first preset position of the first operating route, the plant-protection unmanned aerial vehicle starts to decelerate, so that the flight speed of the plant-protection unmanned aerial vehicle at the operating end position of the first operating route is decelerated to be zero, the plant-protection unmanned aerial vehicle flies to the operating start position of the second operating route in a translational manner at the preset angular speed, and then the plant-protection unmanned aerial vehicle flies along the second operating route. In the present embodiment, the operating nozzle is maintained in the open state during a flight process of the plant-protection unmanned aerial vehicle. Therefore, the problem in the related art of a need for an additional edge sweeping operation due to that the operating nozzle is to be closed during ridge change of a plant-protection unmanned aerial vehicle or proneness to collision and crashing caused by drift during ridge change is solved, and an operating efficiency and safety are improved.

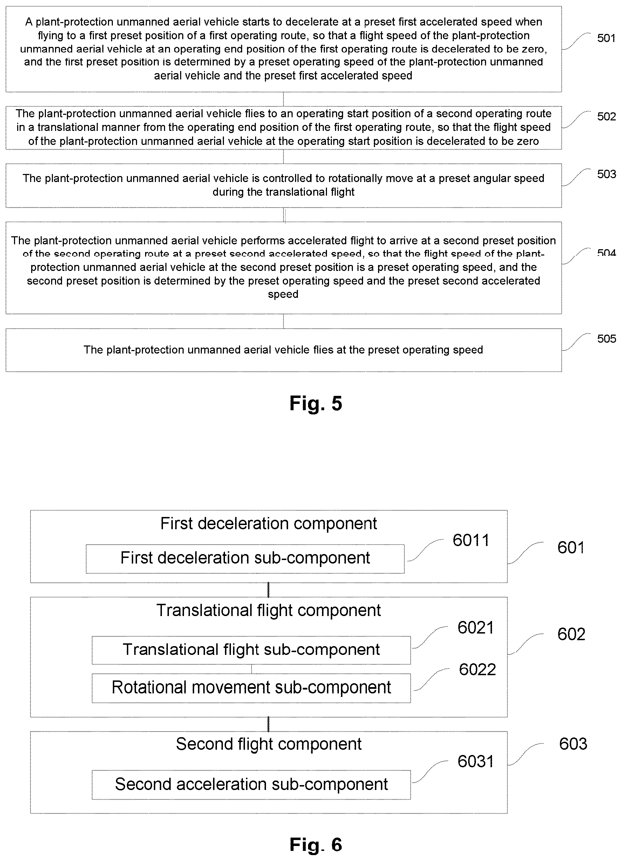

Fig. 5 is a flowchart of an operating method of a plant-protection unmanned aerial vehicle according to an exemplary embodiment the present invention. The method may include the steps as follows.

At step 501, a plant-protection unmanned aerial vehicle starts to decelerate at a preset first accelerated speed once reaching to a first preset position of a first operating route, so that a flight speed of the plant-protection unmanned aerial vehicle at an operating end position of the first operating route is decelerated to be zero, and the first preset position is determined by a preset operating speed of the plant-protection unmanned aerial vehicle and the preset first accelerated speed.

In an optional embodiment of the present invention, when performing a plant-protection operation on the first operating route, the unmanned aerial vehicle may fly at the preset operating speed. The unmanned aerial vehicle may start to decelerate once reaching to the first preset position, so that the flight speed of the plant-protection unmanned aerial vehicle at the operating end position of the first operating route is decelerated to be zero. Specifically, the plant-protection unmanned aerial vehicle may continuously decelerate from the first preset position at the preset first accelerated speed. Those skilled in the art can set the specific sizes of the operating speed and the first accelerated speed through a flight control system according to actual needs, which is not limited by the embodiment of the present invention.

After the operating speed and the first accelerated speed are set, the first preset position may be determined according to the operating speed and the first accelerated speed.

As an example of the present invention, the first preset position may be determined by the following formula:

$$S_3 = \frac{v_0{}^2}{2a_2}$$

and S1 is a distance between the first preset position and the operating end position of a first operating route, v0 is the preset operating speed, and a1 is the preset first accelerated speed.

For example, Fig. 4 is taken as an example. If point M is the first preset position determined according to the above formula, the plant-protection unmanned aerial vehicle may perform the plant-protection operation according to the preset operating speed between AM. When reaching point M, the plant-protection unmanned aerial vehicle starts to decelerate according to the first accelerated speed, so that the flight speed of the plant-protection unmanned aerial vehicle is decelerated to be zero when the plant-protection unmanned aerial vehicle reaches the operating end point, that is, point B.

At step 502, the plant-protection unmanned aerial vehicle flies to an operating start position of a second operating route in a translational manner from the operating end position of the first operating route, so that the flight speed of the plant-protection unmanned aerial vehicle at the operating start position is decelerated to be zero.

When the plant-protection unmanned aerial vehicle reaches the operating end position of the first operating route, the ridge change can be started. That is, the plant-protection unmanned aerial vehicle flies from the operating end position of the first operating route to the operating start position of the adjacent second operating route.

In an optional embodiment of the present invention, the plant-protection unmanned aerial vehicle may first perform accelerated flight to arrive at a midpoint position of spacing between the first operating route and the second operating route at a preset third accelerated speed, and then continue to perform decelerated flight from the midpoint position to the operating start position of the second operating route at the preset third accelerated speed, so that the flight speed of the plant-protection unmanned aerial vehicle is decelerated to be zero when flying to the operating start position of the second operating route.

In a specific implementation, an operator may set a specific size of a third accelerated speed in the flight control system, and after the third accelerated speed is set, the plant-protection unmanned aerial vehicle may accelerate at the first half of spacing between the first operating route and the second operating route at the third accelerated speed to a midpoint position of the spacing, and continue to decelerate at the second half of the spacing at the third accelerated speed.

It is to be noted that since the acceleration phase and deceleration phase of the plant-protection unmanned aerial vehicle are completed at the preset third accelerated speed during the translational flight, a flight time period of the accelerated flight should be equal with a flight time period of the decelerated flight.

As an example of the present invention, the flight time period of the accelerated flight or the flight time period of the decelerated flight may be separately determined by the following formula:

$$t = 2\sqrt{\frac{S_2}{a_3}}$$

and t is the flight time period of the accelerated flight or the flight time period of the decelerated flight, S2 is spacing between the first operating route and the second operating route, and a3 is the preset third accelerated speed.

For example, Fig. 4 is taken as an example. If point K is the midpoint position of spacing between the first operating route and the second operating route, the plant-protection unmanned aerial vehicle may accelerate from point B to point K according to the preset third accelerated speed, and then decelerate from point K to point C. The flight time period of the plant-protection unmanned aerial vehicle in the acceleration phase and the flight time period of the plant-protection unmanned aerial vehicle in the deceleration phase is a time period t determined above.

At step 503, the plant-protection unmanned aerial vehicle is controlled to rotationally move at a preset angular speed during the translational flight.

In an optional embodiment of the present invention, when the ridge is changed for the translational flight, the preset angular speed may also be used for controlling the rotation of the plant-protection unmanned aerial vehicle, so as to ensure that the plant-protection unmanned aerial vehicle can fly along the edge portion of the adjacent operating route during the ridge change process. Moreover, an operating nozzle is maintained in an open state during this process, in order to perform a spraying operation.

As an example of the present invention, the angular speed of the rotational movement of the plant-protection unmanned aerial vehicle may be determined by the following formula:

$$\omega = \frac{\pi}{2\sqrt{\frac{S_2}{a_3}}}$$

and ω is the preset angular speed, S2 is spacing between the first operating route and the second operating route, and a3 is the preset third accelerated speed.

At step 504, the plant-protection unmanned aerial vehicle performs accelerated flight to arrive at a second preset position of the second operating route at a preset second accelerated speed, so that the flight speed of the plant-protection unmanned aerial vehicle at the second preset position is a preset operating speed, and the second preset position is determined by the preset operating speed and the preset second accelerated speed.

In an optional embodiment of the present invention, when reaching the start position of the second operating route after ridge change, the plant-protection unmanned aerial vehicle may accelerate according to the preset second accelerated speed along the second operating route to the operating speed of the plant-protection unmanned aerial vehicle within a certain distance. For example, the plant-protection unmanned aerial vehicle performs accelerated flight to arrive at the second preset position. Specifically, a acceleration distance depends on the preset operating speed and the preset second accelerated speed.

As an example of the present invention, the acceleration distance may be determined by the following formula:

$$S_3 = \frac{v_0^2}{2a_2}$$

and S3 is a distance between a second preset position and an operating start position of a second operating route, v0 is a preset operating speed, and a2 is a preset second accelerated speed.

For example, Fig. 4 is taken as an example. If point N is the second preset position determined according to the above formula, the plant-protection unmanned aerial vehicle may accelerate at the preset second accelerated speed between CN, and when point N is reached, step S505 can be performed to perform flight according to the preset operating speed.

At step 505, the plant-protection unmanned aerial vehicle flies at the preset operating speed.

It is to be noted that during the flight process of the embodiment of the present invention, the operating nozzle of the plant-protection unmanned aerial vehicle can be always maintained in an open state. Therefore, the problem in the related art of a need for an additional edge sweeping operation for an edge portion of an operating land after operation is solved. Moreover, the plant-protection unmanned aerial vehicle according to the embodiment of the present invention can completely fly within the range of the operating land according to an actual flight route, thereby also avoiding collision and crashing caused by interference with a neighboring region of the operating land, and improving the operating safety.

It is to be noted that, for the method embodiments, for the sake of simple description, they are all expressed as a series of action combinations, but those skilled in the art should understand that the embodiments of the present invention are not limited by the described action sequence, because certain steps may be performed in other sequences or concurrently in accordance with the embodiments of the present invention. In the following, those skilled in the art should also understand that the embodiments described in the specification are all exemplary embodiments, and the actions involved are not necessarily required in the embodiments of the present invention.

Fig. 6 is a structural block diagram of an operating device of a plant-protection unmanned aerial vehicle according to an embodiment of the present invention. The device may include: a first deceleration component 601, a translational flight component 602 and a second flight component 603.

The first deceleration component 601 is configured to start to decelerate once reaching to a first preset position of a first operating route, so that a flight speed of the plant-protection unmanned aerial vehicle at an operating end position of the first operating route is decelerated to be zero.

The translational flight component 602 is configured to fly to an operating start position of a second operating route in a translational manner at a preset angular speed.

The second flight component 603 is configured to fly along the second operating route.

An operating nozzle is maintained in an open state during a flight process of the plant-protection unmanned aerial vehicle.

In the embodiment of the present invention, the first deceleration component 601 may include a first deceleration sub-component 6011.

The first deceleration sub-component 6011 is configured to start to decelerate at a preset first accelerated speed once reaching to the first preset position of the first operating route, so that the flight speed of the plant-protection unmanned aerial vehicle at the operating end position of the first operating route is decelerated to be zero, and the first preset position is determined by a preset operating speed of the plant-protection unmanned aerial vehicle and the preset first accelerated speed.

In the embodiment of the present invention, the translational flight component 602 may include a translational flight sub-component 6021 and a rotational movement sub-component 6022.

The translational flight sub-component 6021 is configured to fly to the operating start position of the second operating route in the translational manner from the operating end position of the first operating route, so that the flight speed of the plant-protection unmanned aerial vehicle at the operating start position is decelerated to be zero.

The rotational movement sub-component 6022 is configured to control the plant-protection unmanned aerial vehicle to rotationally move at the preset angular speed during a translational flight.

In the embodiment of the present invention, the translational flight sub-component 6021 may include an acceleration element and a deceleration element.

The acceleration element is configured to perform accelerated flight to arrive at a midpoint position of spacing between the first operating route and the second operating route at a preset third accelerated speed.

The deceleration element is configured to perform decelerated fight from the midpoint position to the operating start position of the second operating route at the preset third accelerated speed.

In the embodiment of the present invention, the second flight component 603 may include a second acceleration sub-component 6031 and a flight sub-component 6032.

The second acceleration sub-component 6031 is configured to perform accelerated flight to arrive at a second preset position of the second operating route at a preset second accelerated speed, so that the flight speed of the plant-protection unmanned aerial vehicle at the second preset position is a preset operating speed, and the second preset position may be determined by the preset operating speed and the preset second accelerated speed.

The flight sub-component 6032 is configured to fly at the preset operating speed.

For the device embodiment, since it is basically similar to the method embodiment, the description is relatively simple, and the relevant parts can be referred to the description of the method embodiment.

Various embodiments in the present specification are described in a progressive manner, each embodiment focuses on differences from other embodiments, and the identical or similar parts between the various embodiments can be referred to each other.

A person skilled in the art should understand that the embodiments of the present invention may be provided as a method, a device or a computer program product. Thus, the embodiments of the present invention may adopt forms of complete hardware embodiments, complete software embodiments or embodiments integrating software and hardware. Moreover, the embodiments of the present invention may adopt the form of a computer program product implemented on one or more computer available storage media (including, but not limited to, a disk memory, a CD-ROM, an optical memory and the like) containing computer available program codes.

The embodiments of the present invention are described with reference to flowcharts and/or block diagrams of the method, the terminal device (system) and the computer program product according to the embodiments of the present invention. It is to be understood that each flow and/or block in the flowcharts and/or the block diagrams and a combination of the flows and/or the blocks in the flowcharts and/or the block diagrams may be implemented by computer program instructions. These computer program instructions may be provided for a general computer, a dedicated computer, an embedded processor or processors of other programmable data processing terminal devices to generate a machine, so that an apparatus for achieving functions designated in one or more flows of the flowcharts and/or one or more blocks of the block diagrams is generated via instructions executed by the computers or the processors of the other programmable data processing terminal devices.

These computer program instructions may also be stored in a computer readable memory capable of guiding the computers or the other programmable data processing devices to work in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing terminal devices, so that processing implemented by the computers is generated by executing a series of operation steps on the computers or the other programmable terminal devices, and therefore the instructions executed on the computers or the other programmable terminal devices provide a step of achieving the functions designated in one or more flows of the flowcharts and/or one or more blocks of the block diagrams.

Finally, it is also to be noted that relational terms such as first and second are used merely to distinguish one entity or operation from another entity or operation herein, and do not necessarily require or imply the existence of any such actual relationship or order between these entities or operations. Moreover, the terms "include", "contain" or any other variations thereof are intended to cover a non-exclusive inclusion, such that a process, method, article or terminal device including a series of elements not only includes those elements, but also includes those elements that are not explicitly listed, or includes elements inherent to such a process, method, article or terminal device. Under the condition of no more limitations, it is not excluded that additional identical elements exist in the process, method, article or terminal device including elements defined by a sentence "including a ...".

The above is a detailed description of an operating method of a plant-protection unmanned aerial vehicle and an operating device of a plant-protection unmanned aerial vehicle provided by the present invention. The principle and implementation manner of the present invention are described in the specific examples herein. The description of the embodiments is only for helping to understand the method of the present invention and its core ideas. Furthermore, for those of ordinary skill in the art, according to the idea of the present invention, there will be changes in specific implementation manners and application scopes. In conclusion, the above description should not be taken as limiting the present invention.

**Claims**

1. An operating method of a plant-protection unmanned aerial vehicle, comprising:

   starting (301) to decelerate once reaching to a first preset position of a first operating route, so that a flight speed of the plant-protection unmanned aerial vehicle at an operating end position of the first operating route is decelerated to be zero;
   controlling (302) the plant-protection unmanned aerial vehicle to rotate at a preset angular speed, and translating the plant-protection unmanned aerial vehicle from the operating end position of the first operating route to an operating start position of a second operating route in a translational manner by controlling a lateral movement speed of the plant-protection unmanned aerial vehicle; and
   flying (303) along the second operating route, wherein an operating nozzle of the plant-protection unmanned aerial vehicle is maintained in an open state during a flight process from the operating end position of the first operating route to the operating start position of the second operating route of the plant-protection unmanned aerial vehicle.

2. The method as claimed in claim 1, wherein starting to decelerate once reaching to the first preset position of the first operating route so that the flight speed of the plant-protection unmanned aerial vehicle at the operating end position of the first operating route is decelerated to be zero comprises:
   starting (501) to decelerate at a preset first acceleration once reaching to the first preset position of the first operating route, so that the flight speed of the plant-protection unmanned aerial vehicle at the operating end position of the first operating route is decelerated to be zero, wherein the first preset position is determined by a preset operating speed of the plant-protection unmanned aerial vehicle and the preset first acceleration.

3. The method as claimed in claim 1, wherein flying to the operating start position of the second operating route in the translational manner at the preset angular speed comprises:

> flying (502) to the operating start position of the second operating route in the translational manner from the operating end position of the first operating route, so that the flight speed of the plant-protection unmanned aerial vehicle at the operating start position is decelerated to be zero; and
> controlling (503) the plant-protection unmanned aerial vehicle to rotationally move at the preset angular speed during a translational flight.

4. The method as claimed in claim 3, wherein flying to the operating start position of the second operating route in the translational manner from the operating end position of the first operating route so that the flight speed of the plant-protection unmanned aerial vehicle at the operating start position is decelerated to be zero comprises:

> performing accelerated flight to arrive at a midpoint position of spacing between the first operating route and the second operating route at a preset third acceleration; and
> performing decelerated fight from the midpoint position to the operating start position of the second operating route at the preset third acceleration.

5. The method as claimed in claim 1, wherein flying along the second operating route comprises:

> performing (504) accelerated flight to arrive at a second preset position of the second operating route at a preset second acceleration, so that the flight speed of the plant-protection unmanned aerial vehicle at the second preset position is a preset operating speed, wherein the second preset position is determined by the preset operating speed and the preset second acceleration; and
> flying (505) at the preset operating speed.

6. An operating device of a plant-protection unmanned aerial vehicle, comprising:

> a first deceleration component (601), configured to start to decelerate once reaching to a first preset position of a first operating route, so that a flight speed of the plant-protection unmanned aerial vehicle at an operating end position of the first operating route is decelerated to be zero;
a translational flight component (602), configured to control the plant-protection unmanned aerial vehicle to rotate at a preset angular speed, and translate the plant-protection unmanned aerial vehicle from the operating end position of the first operating route to an operating start position of a second operating route in a translational manner by controlling a lateral movement speed of the plant-protection unmanned aerial vehicle; and
a second flight component (603), configured to fly along the second operating route,
wherein an operating nozzle of the plant-protection unmanned aerial vehicle is maintained in an open state during a flight process from the operating end position of the first operating route to the operating start position of the second operating route of the plant-protection unmanned aerial vehicle.

7. The device as claimed in claim 6, wherein the first deceleration component (601) comprises:
a first deceleration sub-component (6011), configured to start to decelerate at a preset first acceleration once reaching to the first preset position of the first operating route, so that the flight speed of the plant-protection unmanned aerial vehicle at the operating end position of the first operating route is decelerated to be zero, wherein the first preset position is determined by a preset operating speed of the plant-protection unmanned aerial vehicle and the preset first acceleration.

8. The device as claimed in claim 6, wherein the translational flight component (602) comprises:

> a translational flight sub-component (6021), configured to fly to the operating start position of the second operating route in the translational manner from the operating end position of the first operating route, so that the flight speed of the plant-protection unmanned aerial vehicle at the operating start position is decelerated to be zero; and
> a rotational movement sub-component (6022), configured to control the plant-protection unmanned aerial vehicle to rotationally move at the preset angular speed during a translational flight.

9. The device as claimed in claim 8, wherein the translational flight sub-component (6021) comprises:

> an acceleration element, configured to perform accelerated flight to arrive at a midpoint position of spacing between the first operating route and the second operating route at a preset third acceleration; and

a deceleration element, configured to perform decelerated fight from the midpoint position to the operating start position of the second operating route at the preset third acceleration.

10. The device as claimed in claim 6, wherein the second flight component (603) comprises:

a second acceleration sub-component (6031), configured to perform accelerated flight to arrive at a second preset position of the second operating route at a preset second acceleration, so that the flight speed of the plant-protection unmanned aerial vehicle at the second preset position is a preset operating speed, wherein the second preset position is determined by the preset operating speed and the preset second acceleration; and
a flight sub-component, configured to fly at the preset operating speed.

**Patentansprüche**

1. Betriebsverfahren für ein unbemanntes Pflanzenschutz-Luftfahrzeug, umfassend:

Beginnen (301), abzubremsen, sobald eine erste voreingestellte Position einer ersten Betriebsroute erreicht wird, sodass eine Fluggeschwindigkeit des unbemannten Pflanzenschutz-Luftfahrzeugs an einer Betriebs-Endposition der ersten Betriebsroute auf Null abgebremst wird;
Steuern (302) des unbemannten Pflanzenschutz-Luftfahrzeugs so, dass es sich mit einer voreingestellten Winkelgeschwindigkeit dreht, und translatorisches Verlagern des unbemannten Pflanzenschutz-Luftfahrzeugs von der Betriebs-Endposition der ersten Betriebsroute zu einer Betriebs-Startposition einer zweiten Betriebsroute durch Steuern einer seitlichen Bewegungsgeschwindigkeit des unbemannten Pflanzenschutz-Luftfahrzeugs; und
Fliegen (303) entlang der zweiten Betriebsroute, wobei eine Betriebsdüse des unbemannten Pflanzenschutz-Luftfahrzeugs während eines Flugvorgangs von der Betriebs-Endposition der ersten Betriebsroute zur Betriebs-Startposition der zweiten Betriebsroute des unbemannten Pflanzenschutz-Luftfahrzeugs in einem offenen Zustand gehalten wird.

2. Verfahren nach Anspruch 1, wobei das Beginnen, abzubremsen, sobald die erste voreingestellte Position der ersten Betriebsroute erreicht wird, sodass die Fluggeschwindigkeit des unbemannten Pflanzenschutz-Luftfahrzeugs an der Betriebs-Endposition der ersten Betriebsroute auf Null abgebremst wird, umfasst:

Beginnen (501), bei einer voreingestellten ersten Beschleunigung abzubremsen, sobald die erste voreingestellte Position der ersten Betriebsroute erreicht wird, sodass die Fluggeschwindigkeit des unbemannten Pflanzenschutz-Luftfahrzeugs an der Betriebs-Endposition der ersten Betriebsroute auf Null abgebremst wird, wobei die erste voreingestellte Position von einer voreingestellten Betriebsgeschwindigkeit des unbemannten Pflanzenschutz-Luftfahrzeugs und der voreingestellten ersten Beschleunigung bestimmt wird.

3. Verfahren nach Anspruch 1, wobei das translatorische Fliegen mit der voreingestellten Winkelgeschwindigkeit zur Betriebs-Startposition der zweiten Betriebsroute umfasst:

translatorisches Fliegen (502) von der Betriebs-Endposition der ersten Betriebsroute zur Betriebs-Startposition der zweiten Betriebsroute so, dass die Fluggeschwindigkeit des unbemannten Pflanzenschutz-Luftfahrzeugs an der Betriebs-Startposition auf Null abgebremst wird; und
Steuern (503) des unbemannten Pflanzenschutz-Luftfahrzeugs so, dass es sich während eines Translationsfluges mit der voreingestellten Winkelgeschwindigkeit drehend bewegt.

4. Verfahren nach Anspruch 3, wobei das translatorische Fliegen von der Betriebs-Endposition der ersten Betriebsroute zur Betriebs-Startposition der zweiten Betriebsroute so, dass die Fluggeschwindigkeit des unbemannten Pflanzenschutz-Luftfahrzeugs an der Betriebs-Startposition auf Null abgebremst wird, umfasst:

Durchführen eines beschleunigten Fluges mit einer voreingestellten dritten Beschleunigung, um an einer Mittelpunktposition des Raumes zwischen der ersten Betriebsroute und der zweiten Betriebsroute anzukommen; und
Durchführen eines abgebremsten Fluges bei der voreingestellten dritten Beschleunigung von der Mittelpunktposition zur Betriebs-Startposition der zweiten Betriebsroute.

5. Verfahren nach Anspruch 1, wobei das Fliegen entlang der zweiten Betriebsroute umfasst:

Durchführen (504) eines beschleunigten Fluges mit einer voreingestellten zweiten Beschleunigung, um so an einer zweiten voreingestellten Position der zweiten Betriebsroute anzukommen, dass es sich bei der Fluggeschwindigkeit des unbemannten Pflanzenschutz-Luftfahrzeugs an der zweiten voreingestellten Position um eine voreingestellte Betriebsgeschwindigkeit handelt, wobei die zweite voreingestellte Position von der voreingestellten Betriebsgeschwindigkeit und der voreingestellten zweiten Beschleunigung bestimmt wird; und Fliegen (505) mit der voreingestellten Betriebsgeschwindigkeit.

6. Betriebsvorrichtung für ein unbemanntes Pflanzenschutz-Luftfahrzeug, umfassend:

eine erste Bremskomponente (601), die so ausgelegt ist, dass sie beginnt, abzubremsen, sobald eine erste voreingestellte Position einer ersten Betriebsroute erreicht wird, sodass eine Fluggeschwindigkeit des unbemannten Pflanzenschutz-Luftfahrzeugs an einer Betriebs-Endposition der ersten Betriebsroute auf Null abgebremst wird; eine Translationsflugkomponente (602), die so ausgelegt ist, dass sie das unbemannte Pflanzenschutz-Luftfahrzeug so steuert, dass es sich mit einer voreingestellten Winkelgeschwindigkeit dreht, und das unbemannte Pflanzenschutz-Luftfahrzeug translatorisch von der Betriebs-Endposition der ersten Betriebsroute zu einer Betriebs-Startposition einer zweiten Betriebsroute verlagert, indem es eine seitliche Bewegungsgeschwindigkeit des unbemannten Pflanzenschutz-Luftfahrzeugs steuert; und eine zweite Flugkomponente (603), die so ausgelegt ist, dass sie entlang der zweiten Betriebsroute fliegt, wobei eine Betriebsdüse des unbemannten Pflanzenschutz-Luftfahrzeugs während eines Flugvorgangs von der Betriebs-Endposition der ersten Betriebsroute zur Betriebs-Startposition der zweiten Betriebsroute des unbemannten Pflanzenschutz-Luftfahrzeugs in einem offenen Zustand gehalten wird.

7. Vorrichtung nach Anspruch 6, wobei die erste Bremskomponente (601) umfasst: eine erste Brems-Unterkomponente (6011), die so ausgelegt ist, dass sie bei einer voreingestellten ersten Beschleunigung beginnt, abzubremsen, sobald die erste voreingestellte Position der ersten Betriebsroute erreicht wird, sodass die Fluggeschwindigkeit des unbemannten Pflanzenschutz-Luftfahrzeugs an der Betriebs-Endposition der ersten Betriebsroute auf Null abgebremst wird, wobei die erste voreingestellte Position von einer voreingestellten Betriebsgeschwindigkeit des unbemannten Pflanzenschutz-Luftfahrzeugs und der voreingestellten ersten Beschleunigung bestimmt wird.

8. Vorrichtung nach Anspruch 6, wobei die Translationsflugkomponente (602) umfasst:

eine Translationsflug-Unterkomponente (6021), die so ausgelegt ist, dass sie translatorisch so von der Betriebs-Endposition der ersten Betriebsroute zur Betriebs-Startposition der zweiten Betriebsroute fliegt, dass die Fluggeschwindigkeit des unbemannten Pflanzenschutz-Luftfahrzeugs an der Betriebs-Startposition auf Null abgebremst wird; und eine Drehbewegungs-Unterkomponente (6022), die so ausgelegt ist, dass sie das unbemannte Pflanzenschutz-Luftfahrzeug so steuert, dass es sich während eines Translationsfluges mit der voreingestellten Winkelgeschwindigkeit drehend bewegt.

9. Vorrichtung nach Anspruch 8, wobei die Translationsflug-Unterkomponente (6021) umfasst:

ein Beschleunigungselement, das so ausgelegt ist, dass es einen beschleunigten Flug mit einer voreingestellten dritten Beschleunigung durchführt, um an einer Mittelpunktposition eines Raumes zwischen der ersten Betriebsroute und der zweiten Betriebsroute anzukommen; und ein Bremselement, das so ausgelegt ist, dass es bei der voreingestellten dritten Beschleunigung einen abgebremsten Flug von der Mittelpunktposition zur Betriebs-Startposition der zweiten Betriebsroute durchführt.

10. Vorrichtung nach Anspruch 6, wobei die zweite Flugkomponente (603) umfasst:

eine zweite Beschleunigungs-Unterkomponente (6031), die so ausgelegt ist, dass sie einen beschleunigten Flug mit einer voreingestellten zweiten Beschleunigung durchführt, um so an einer zweiten voreingestellten Position der zweiten Betriebsroute anzukommen, dass es sich bei der Fluggeschwindigkeit des unbemannten Pflanzenschutz-Luftfahrzeugs an der zweiten voreingestellten Position um eine voreingestellte Betriebsgeschwindigkeit handelt, wobei die zweite voreingestellte Position von der voreingestellten Betriebsgeschwindigkeit und der voreingestellten zweiten Beschleunigung bestimmt wird; und eine Flug-Unterkomponente, die so eingestellt ist, dass sie mit der voreingestellten Betriebsgeschwindigkeit fliegt.

**Revendications**

1. Procédé de fonctionnement d'un véhicule aérien sans pilote de protection des plantes, comprenant le fait :

de commencer (301) à décélérer une fois une première position prédéfinie d'un premier itinéraire de fonctionnement est atteinte, de sorte qu'une vitesse de vol du véhicule aérien sans pilote de protection des plantes à une position finale de fonctionnement du premier itinéraire de fonctionnement soit décélérée jusqu'à zéro ;
de commander (302) le véhicule aérien sans pilote de protection des plantes pour qu'il tourne à une vitesse angulaire prédéfinie, et de déplacer le véhicule aérien sans pilote de protection des plantes depuis la position finale de fonctionnement du premier itinéraire de fonctionnement jusqu'à une position de début de fonctionnement d'un deuxième itinéraire de fonctionnement par translation en commandant une vitesse de déplacement latéral du véhicule aérien sans pilote de protection des plantes ; et
de voler (303) le long du deuxième itinéraire de fonctionnement,
dans lequel une buse de fonctionnement du véhicule aérien sans pilote de protection des plantes est maintenue dans un état ouvert pendant un processus de vol depuis la position finale de fonctionnement du premier itinéraire de fonctionnement jusqu'à la position de début de fonctionnement du deuxième itinéraire de fonctionnement du véhicule aérien sans pilote de protection des plantes.

2. Procédé tel que revendiqué dans la revendication 1, dans lequel commencer à décélérer une fois la première position prédéfinie du premier itinéraire de fonctionnement est atteinte de sorte que la vitesse de vol du véhicule aérien sans pilote de protection des plantes à la position finale de fonctionnement du premier itinéraire de fonctionnement soit décélérée jusqu'à zéro comprend le fait :
de commencer (501) à décélérer à une première accélération prédéfinie une fois la première position prédéfinie du premier itinéraire de fonctionnement est atteinte, de sorte que la vitesse de vol du véhicule aérien sans pilote de protection des plantes à la position finale de fonctionnement du premier itinéraire de fonctionnement soit décélérée jusqu'à zéro, où la première position prédéfinie est déterminée par une vitesse de fonctionnement prédéfinie du véhicule aérien sans pilote de protection des plantes et la première accélération prédéfinie.

3. Procédé tel que revendiqué dans la revendication 1, dans lequel le vol jusqu'à la position de début de fonctionnement du deuxième itinéraire de fonctionnement par translation à la vitesse angulaire prédéfinie comprend le fait :

de voler (502) jusqu'à la position de début de fonctionnement du deuxième itinéraire de fonctionnement par translation depuis la position de fin de fonctionnement du premier itinéraire de fonctionnement, de sorte que la vitesse de vol du véhicule aérien sans pilote de protection des plantes à la position de début de fonctionnement soit décélérée jusqu'à zéro ; et
de commander (503) le véhicule aérien sans pilote de protection des plantes pour qu'il se déplace en rotation à la vitesse angulaire prédéfinie pendant un vol de translation.

4. Procédé tel que revendiqué dans la revendication 3, **caractérisé en ce que** le vol jusqu'à la position de début de fonctionnement du deuxième itinéraire de fonctionnement par translation depuis la position de fin de fonctionnement du premier itinéraire de fonctionnement de sorte que la vitesse de vol du véhicule aérien sans pilote de protection des plantes à la position de début de fonctionnement soit décélérée jusqu'à zéro comprend le fait :

d'effectuer un vol accéléré pour arriver à une position de mi-parcours d'espacement entre le premier itinéraire de fonctionnement et le deuxième itinéraire de fonctionnement à une troisième accélération prédéfinie ; et
d'effectuer un vol décéléré depuis la position de mi-parcours jusqu'à la position de début de fonctionnement du deuxième itinéraire de fonctionnement à la troisième accélération prédéfinie.

5. Procédé tel que revendiqué dans la revendication 1, dans lequel le vol le long du deuxième itinéraire de fonctionnement comprend le fait :

d'effectuer (504) un vol accéléré pour arriver à une deuxième position prédéfinie du deuxième itinéraire de fonctionnement à une deuxième accélération prédéfinie, de sorte que la vitesse de vol du véhicule aérien sans pilote de protection des plantes à la deuxième position prédéfinie soit une vitesse de fonctionnement prédéfinie, où la deuxième position prédéfinie est déterminée par la vitesse de fonctionnement prédéfinie et la deuxième accélération prédéfinie ; et
de voler (505) à la vitesse de fonctionnement prédéfinie.

6. Dispositif d'actionnement d'un véhicule aérien sans pilote de protection des plantes, comprenant :

un premier composant de décélération (601), configuré pour commencer à décélérer une fois une première position prédéfinie d'un premier itinéraire de fonctionnement est atteinte, de sorte qu'une vitesse de vol du véhicule aérien sans pilote de protection des plantes à une position de fin de fonctionnement du premier itinéraire de fonctionnement soit décélérée jusqu'à zéro ; un composant de vol de translation (602), configuré pour commander le véhicule aérien sans pilote de protection des plantes pour qu'il tourne à une vitesse angulaire prédéfinie, et pour déplacer le véhicule aérien sans pilote de protection des plantes depuis la position de fin de fonctionnement du premier itinéraire de fonctionnement jusqu'à une position de début de fonctionnement d'un deuxième itinéraire de fonctionnement par translation en commandant une vitesse de déplacement latéral du véhicule aérien sans pilote de protection des plantes ; et un deuxième composant de vol (603), configuré pour voler le long du deuxième itinéraire de fonctionnement,

dans lequel une buse de fonctionnement du véhicule aérien sans pilote de protection des plantes est maintenue dans un état ouvert pendant un processus de vol depuis la position de fin de fonctionnement du premier itinéraire de fonctionnement jusqu'à la position de début de fonctionnement du deuxième itinéraire de fonctionnement du véhicule aérien sans pilote de protection des plantes .

7. Dispositif tel que revendiqué dans la revendication 6, dans lequel le premier composant de décélération (601) comprend :
   un premier sous-composant de décélération (6011), configuré pour commencer à décélérer à une première accélération prédéfinie une fois la première position prédéfinie du premier itinéraire de fonctionnement est atteinte, de sorte que la vitesse de vol du véhicule aérien sans pilote de protection des plantes à la position de fin de fonctionnement du premier itinéraire de fonctionnement soit décélérée jusqu'à zéro, où la première position prédéfinie est déterminée par une vitesse de fonctionnement prédéfinie du véhicule aérien sans pilote de protection des plantes et la première accélération prédéfinie.

8. Dispositif tel que revendiqué dans la revendication 6, dans lequel le composant de vol de translation (602) comprend :

   un sous-composant de vol de translation (6021), configuré pour voler jusqu'à la position de début de fonctionnement du deuxième itinéraire de fonctionnement par translation depuis la position de fin de fonctionnement du premier itinéraire de fonctionnement, de sorte que la vitesse de vol du véhicule aérien sans pilote de protection des plantes à la position de début de fonctionnement soit décélérée jusqu'à zéro ; et un sous-composant de mouvement de rotation (6022), configuré pour commander le véhicule aérien sans pilote de protection des plantes pour qu'il se déplace en rotation à la vitesse angulaire prédéfinie pendant un vol de translation.

9. Dispositif tel que revendiqué dans la revendication 8, dans lequel le sous-composant de vol de translation (6021) comprend :

   un élément d'accélération, configuré pour effectuer un vol accéléré pour arriver à une position de mi-parcours d'espacement entre le premier itinéraire de fonctionnement et le deuxième itinéraire de fonctionnement à une troisième accélération prédéfinie ; et un élément de décélération, configuré pour effectuer un vol décéléré depuis la position de mi-parcours jusqu'à la position de début de fonctionnement du deuxième itinéraire de fonctionnement à la troisième accélération prédéfinie.

10. Dispositif tel que revendiqué dans la revendication 6, dans lequel le deuxième composant de vol (603) comprend :

   un deuxième sous-composant d'accélération (6031), configuré pour effectuer un vol accéléré pour arriver à une deuxième position prédéfinie du deuxième itinéraire de fonctionnement à une deuxième accélération prédéfinie, de sorte que la vitesse de vol du véhicule aérien sans pilote de protection des plantes à la deuxième position prédéfinie est une vitesse de fonctionnement prédéfinie, où la deuxième position prédéfinie est déterminée par la vitesse de fonctionnement prédéfinie et la deuxième accélération prédéfinie ; et un sous-composant de vol, configuré pour voler à la vitesse de fonctionnement prédéfinie.

**Fig. 1**

**Fig. 2**

A plant-protection unmanned aerial vehicle starts to decelerate when flying to a first preset position of a first operating route, so that a flight speed of the plant-protection unmanned aerial vehicle at an operating end position of the first operating route is decelerated to be zero    301

The plant-protection unmanned aerial vehicle flies to an operating start position of a second operating route in a translational manner at a preset angular speed    302

The plant-protection unmanned aerial vehicle flies along the second operating route, and an operating nozzle is maintained in an open state during a flight process of the plant-protection unmanned aerial vehicle    303

**Fig. 3**

**Fig. 4**

A plant-protection unmanned aerial vehicle starts to decelerate at a preset first accelerated speed when flying to a first preset position of a first operating route, so that a flight speed of the plant-protection unmanned aerial vehicle at an operating end position of the first operating route is decelerated to be zero, and the first preset position is determined by a preset operating speed of the plant-protection unmanned aerial vehicle and the preset first accelerated speed ⟋ 501

The plant-protection unmanned aerial vehicle flies to an operating start position of a second operating route in a translational manner from the operating end position of the first operating route, so that the flight speed of the plant-protection unmanned aerial vehicle at the operating start position is decelerated to be zero ⟋ 502

The plant-protection unmanned aerial vehicle is controlled to rotationally move at a preset angular speed during the translational flight ⟋ 503

The plant-protection unmanned aerial vehicle performs accelerated flight to arrive at a second preset position of the second operating route at a preset second accelerated speed, so that the flight speed of the plant-protection unmanned aerial vehicle at the second preset position is a preset operating speed, and the second preset position is determined by the preset operating speed and the preset second accelerated speed ⟋ 504

The plant-protection unmanned aerial vehicle flies at the preset operating speed ⟋ 505

## Fig. 5

First deceleration component

First deceleration sub-component ⟋ 6011    ⟋ 601

Translational flight component

Translational flight sub-component ⟋ 6021    ⟋ 602

Rotational movement sub-component ⟋ 6022

Second flight component    ⟋ 603

Second acceleration sub-component ⟋ 6031

## Fig. 6

**EP 3 540 553 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016027544 A1